# EUROPÄISCHE PATENTANMELDUNG

(11) **EP 3 799 276 A1**
(43) Veröffentlichungstag der Anmeldung: **31.03.2021**
(21) Anmeldenummer: 19200484.4
(22) Anmeldetag: 30.09.2019
(51) Int. Cl.: H02K 13/02, H02K 17/24

(54) **WELLE FÜR EINEN SCHLEIFRINGLÄUFER**

(71) Anmelder: Siemens Aktiengesellschaft, 80333 München (DE)
(72) Erfinder: Friedl, Daniel, 94081 Fürstenzell (DE); Gruber, Robert, 94099 Ruhstorf (DE); Memminger, Oliver, 94127 Neuburg a. Inn (DE); Mihajlovic, Sasa, 94099 Ruhstorf a.d. Rott (DE); Schifferer, Klaus, 94152 Neuhaus am Inn (DE); Sperl, Tobias, 94542 Haarbach (DE); Vogel, Anatoli, 94032 Passau (DE)

(57) **Zusammenfassung**

Eine Welle (8) weist eine Durchführung für einen Stromleiter (13, 14) und einen Halter (24) zur Positionierung des Stromleiters (13, 14) auf. Der Halter (24) kann den Stromleiter (13, 14) in bzw. über einen Wendepunkt (40) einer Biegungskurve des Stromleiters (13, 14) fixieren. Hierfür weist der Halter (24) insbesondere eine Basis und einen Deckel auf.

## Beschreibung

Die Erfindung betrifft eine Welle mit einer Durchführung für einen Stromleiter. Derartige Wellen gibt es insbesondere bei elektrischen Maschinen mit Schleifringläufer. Derartige elektrische Maschinen weisen insbesondere auch eine Bürstenhalterung eines Schleifringsystems auf. Die elektrische Maschine ist insbesondere eine dynamoelektrisch erregte Maschine.

Schleifringsysteme dienen dazu, in den rotierenden Teil einer dynamoelektrischen Maschine, also den Läufer, eine elektrische Erregung einzubringen. Durch immer höhere Leistungen der dynamoelektrischen Maschine, beispielsweise Generatoren von Windkraftanlagen, werden die dafür erforderlichen übertragbaren elektrischen Leistungen immer höher. Dies führt zu immer höheren Stromstärken und/oder zu höheren Spannungen. Weiterhin führt dies zu größeren Querschnitten elektrischer Stromleiter und/oder zu höheren Isolierungen.

Durch Kosten- und Bauraumoptimierung und steigenden Leistungsanforderungen insbesondere bei Windkraftanlagen, werden Generatoren bzw. Motoren und ihre Komponenten immer kompakter und mit höheren Strömen belastet. In diesem Fall sind auch die stromführenden Stromleiter, welche insbesondere Litzen sind, und deren Querschnitte entsprechend zu dimensionieren bzw. zu vergrößern. Die Stromverbindung zwischen dem Läufer und dem Schleifring wird beispielsweise mit 2 mal 240mm² (oder größer) Schaltlitzen pro Phase realisiert und durch entsprechende Bohrungen in die Welle geführt. Die elektrische Maschine (also insbesondere die dynamoelektrische Maschine) betrifft insbesondere eine dreiphasige elektrische Maschine für eine Drehstrom-Anwendung. Ein erhöhtes Gewicht der Litzen, also der Stromleiter (wegen des größeren Durchmessers für die höheren Stromstärken), kann zu Rissen in einem Verguss führen, wobei der Verguss die Stromleiter umgibt.

Eine Aufgabe der Erfindung ist es, die Führung eines Stromleiters durch die Welle zu verbessern.

Eine Lösung der Aufgabe ergibt sich bei einer Welle mit den Merkmalen nach Anspruch 1. Weitere Ausgestaltungen ergeben sich beispielsweise gemäß der Ansprüche 2 bis 12. Eine Lösung der Aufgabe ergibt sich auch bei einem Schleifringläufer, insbesondere einer Asynchronmaschine, welcher eine Welle nach einem der Ansprüche bzw. nach einem der im folgenden beschriebenen Ausgestaltungen aufweist.

Eine Welle weist eine Durchführung für einen Stromleiter auf. Weiterhin weist die Welle einen Halter zur Positionierung des Stromleiters auf. Die Welle ist insbesondere teilweise hohl, wobei in dem Teil der Welle, welcher hohl ist, ein oder mehrere Stromleiter verlaufen. Die Welle ist also insbesondere teilweise oder ganz als eine Hohlwelle ausgeführt. Insbesondere verlaufen in der Welle Stromleiter für ein Drehstromsystem. Die Welle ist insbesondere für einen Schleifringläufer vorgesehen bzw. ist die Welle ein Teil des Schleifringläufers. Der Schleifringläufer ist insbesondere für eine Asynchronmaschine vorgesehen. Die Asynchronmaschine ist beispielsweise eine doppelt gespeiste Asynchronmaschine. Die Asynchronmaschine ist beispielsweise ein Generator und/oder ein Motor. Die Asynchronmaschine ist also insbesondere eine elektrisch erregte dynamoelektrische Maschine.

Der Schleifringläufer weist insbesondere ein Schleifringsystem auf. Die Schleifringe sind über Bürsten kontaktierbar.

Durch den Halter zur Positionierung des Stromleiters kann dieser in einer bestimmten Position gehalten werden. Der Halter kann dabei zum Halten eines Stromleiters oder mehrerer Stromleiter ausgebildet sein. Beispiele sind hier zwei, drei oder vier Stromleiter. Die Stromleiter, welche mittels eines Halters gehalten werden, betreffen insbesondere eine Phase eines Drehstromes. Die Stromleiter sind beispielsweise massiv oder als Litze ausgeführt. Als Material für den Stromleiter kann beispielsweise Kupfer oder Aluminium verwendet sein. Durch den Halter kann der Stromleiter (bzw. können die Stromleiter - d.h. auch wenn im Folgenden nur von einem Stromleiter gesprochen wird, der gehalten ist, so gilt dies auch für mehrere Stromleiter, die von dem Halter gehalten sind) vor einem Vergießen in einer vorgegebenen Position gehalten werden. Zum Vergießen können beispielsweise ein Harz bzw. eine Harzverbindung verwendet werden. Alternativ oder in Kombination kann der Halter den Stromleiter (bzw. die Stromleiter) für eine Bandagierung in einer vorgegebenen Position halten. Durch das Halten in einer vorgegebenen Position durch den Halter kann beispielsweise erreicht werden, dass minimale Biegeradien des Stromleiters insbesondere im Bereich des Halters nicht unterschritten werden.

In einer Ausgestaltung der Welle fixiert der Halter den zumindest einen Stromleiter in bzw. über einem Wendepunkt einer Biegungskurve des zumindest einen Stromleiters. Ist ein Wendepunkt vorhanden, so kann der Stromleiter (also ein oder mehrere Stromleiter) mit definierten Biegeradien aus der Welle herausgeführt werden, bzw. in die Welle hineingeführt werden. Diese Biegeradien sind größer als der minimal zulässige Biegeradius für den entsprechenden Leiter. Der minimale Biegeradius hängt beispielsweise vom Material, vom der Querschnittsform und/oder von der Beschaffenheit (z.B. Vollmaterial oder Litze) ab.

In einer Ausgestaltung der Welle weist der Halter eine Basis und einen Deckel auf. Die Basis kann als eine Art Bett dienen, auf welches der Stromleiter gelegt ist. Der Deckel schließt dann den Stromleiter ein. Der Stromleiter ist also zwischen Basis und Deckel positioniert. Der Halter kann beispielsweise zwei Litzen halten. Weiterhin ist es in einer Ausgestaltung möglich, dass der Halter mittels zumindest eines Kunststoff-Kabelhalters in Bezug auf die Welle fixiert bzw. gehalten ist.

In einer Ausgestaltung der Welle weist die Welle eine Tasche zur Aufnahme des Stromleiters auf. Eine Tasche ist insbesondere eine Ausnehmung einer sonst überwiegend runden Welle. Eine derartige Ausnehmung ist beispielsweise mittels eines Fräsvorganges erzielbar. Die Ausnehmung ist beispielsweise eine Nut in der Welle. Die Tasche hat insbesondere eine Längsausrichtung. Die Längsausrichtung ist parallel bzw. im Wesentlichen parallel zu der Achse der Welle. In einer Ausgestaltung der Welle werden um die Verlegung der Stromleiter, also insbesondere der Litzen, zu erleichtern und die Einhaltung der Mindestbiegeradien zu gewährleisten, in die Welle drei Taschen, eine pro Phase, gefräst.

In einer Ausgestaltung der Welle weist diese drei oder mehr Taschen auf. Die Taschen sind insbesondere über den Umfang der Welle gleichmäßig verteilt. In einer Ausgestaltung der Welle sind die Taschen in ihrer Längsausrichtung zueinander versetzt. In einer weiteren Ausgestaltung der Welle, welche auch hier wie zuvor und nachfolgend mit weiteren Ausgestaltungen kombinierbar ist, ist eine Tasche jeweils für eine Phase vorgesehen, wobei insbesondere eine Tasche jeweils zwei oder mehr Stromleiter aufnimmt, wobei die Stromleiter insbesondere Litzen sind. Beispielsweise werden in jeder Tasche zwei Litzen verlegt und anschließend mit einem Kunststoff-Kabelhalter fixiert. Die Litze (englisch stranded wire) ist ein elektrischer Leiter aus Einzeldrähten, welche insbesondere dünn sind. Durch die Einzelleiter ist die Litze leichter zu biegen als ein Stromleiter aus Vollmaterial. Die Einzeldrähte der Litze können eine gemeinsame Isolierhülle aufweisen.

In einer Ausgestaltung der Welle nimmt die Tasche den Halter zumindest teilweise auf. Damit kann der Halter in Bezug auf die Welle positioniert werden.

In einer Ausgestaltung der Welle weist der Halter eine Form auf, die der Form des Stromleiters entspricht. Die Form kann beispielsweise eine Art Rinne sein. Die Rinne hat insbesondere einen halbrunden Querschnitt. Dies dient der besseren Positionierung des Stromleiters durch den Halter. So kann der Halter (Kabelhalter, d. h. Halter des Stromleiters), mit seiner Form an den Durchmesser des Stromleiters (insbesondere den Litzendurchmesser) angepasst sein. Insbesondere ist der Halter auch an die Form der Tasche in der Welle angepasst. Der Halter kann so für einen optimalen und möglichst spannungslosen Verlauf des Stromleiters (insbesondere der Litze) sorgen. Dies betrifft insbesondere nicht nur einen Stromleiter, sondern mehrere Stromleiter, insbesondere alle Stromleiter, die über Taschen aus der Welle geführt sind bzw. in die Welle geführt sind.

In einer Ausgestaltung der Welle ist der Halter mittels einer Schraubverbindung befestigt. Die Befestigung erfolgt an dem Kern der Welle (Wellenkern). Durch die Verwendung einer oder mehrerer Schrauben kann der Halter schnell fixiert werden, sodass in der Fertigung der Welle beispielsweise nicht auf das Aushärten eines Klebers gewartet werden muss. Beispielsweise werden die Halter (welche insbesondere aus einem Kunststoff gefertigt sind (Kunststoff-Kabelhalter)) mit je 2xM8 Schrauben auf der Welle befestigt und halten die Litzen so auf ihrer Position.

In einer Ausgestaltung der Welle ist der Halter vergossen. Dies trägt zu einer zusätzlichen Fixierung bei. Nach dem Vergießen des Halters können beispielsweise restliche Spalte zwischen der Welle, dem Halter (dem Kabelhalter) und den Stromleitern (Litzen) mit Vergussmasse aufgefüllt werden. In einer Ausgestaltung der Welle ist also der Stromleiter vergossen.

In einer Ausgestaltung der Welle weist diese eine Bandage im Bereich des Halters auf. So können die Stromleiter mit bzw. in ihren Haltern bzw. Halter zusätzlich fixiert werden. Nach einem Aushärten der Vergussmasse kann also beispielsweise der Bereich der Welle bandagiert und anschließend mit dem fertig montierten Läufer imprägniert werden.

In einer Ausgestaltung der Welle weist die Durchführung einen Winkel von 20 Grad bis 30 Grad zur Achse der Welle auf. So können auch Stromleiter einen großen minimalen Biegeradius eingesetzt werden.

Die Erfindung sowie weitere vorteilhafte Ausgestaltungen der Erfindung, werden anhand prinzipiell dargestellter Ausführungsbeispiele näher erläutert. Darin zeigen:
- FIG 1: eine prinzipiell doppelt gespeiste Asynchronmaschine,
- FIG 2: einen Teillängsschnitt der doppelt gespeisten Asynchronmaschine,
- FIG 3: einen Teillängsschnitt durch eine Welle,
- FIG 4: eine perspektivische Darstellung von Taschen in der Welle,
- FIG 5: eine vergrößerte perspektivische Darstellung einer Tasche in der Welle,
- FIG 6: einen Längsschnitt durch eine Tasche,
- FIG 7: eine perspektivische Darstellung einer Führung von Stromleitern über die Taschen,
- FIG 8: einen perspektivischen Längsschnitt durch eine Welle,
- FIG 9: einen Halter zur Führung des Stromleiters in der Tasche,
- FIG 10: eine Befestigung des Stromleiters an einem Befestigungsring
- FIG 11: den Deckel des Halters in einer Aufsicht
- FIG 12: den Deckel des Halters mit Sicht auf die Seite, welche den Stromleitern zugewandt ist, und
- FIG 13: den Deckel einer rückwärtigen Ansicht.

In den nachfolgenden Figuren werden gleichartige Elemente mit den gleichen Bezugszeichen bezeichnet.

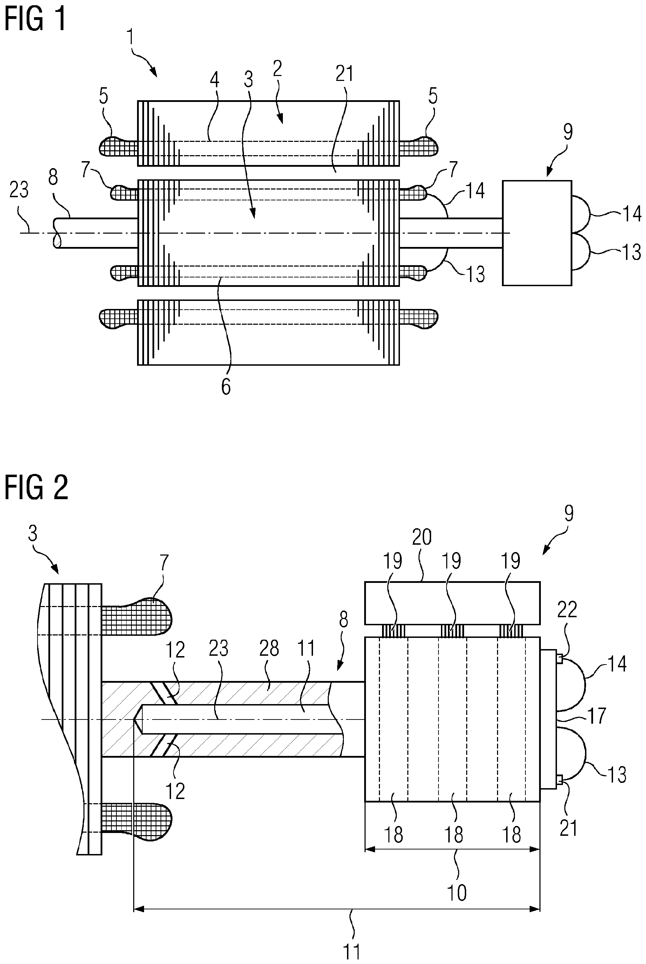

FIG 1 zeigt eine doppelt gespeiste Asynchronmaschine 1 mit einem Stator 2 und einem Schleifringläufer 3, wobei der Stator 2 ein Wicklungssystem 4 aufweist, das an den Stirnseiten des Stators 2 Wickelköpfe 5 aufweist. Auch der Schleifringläufer 3 weist ein Wicklungssystem 6 auf, das ebenfalls Wickelköpfe 7 ausbildet. Der Schleifringläufer 3 ist mit einer Welle 8, mit einer Achse 23, drehfest verbunden, die ebenfalls auf einem axialen Ende, insbesondere der BS-Seite (BS: Bedienseite) ein Schleifringsystem 9 aufweist. Das Schleifringsystem 9 weist dabei mit der Welle 8 mitrotierende Schleifringe 18 (siehe Figur 2) auf, die jeweils über eine oder mehrere Bürsten 19 (siehe Figur 2), die stationär an einer Bürstenhalterung 20 (siehe Figur 2) angebracht sind, elektrische Leistung zum Schleifringläufer 3 über Zuleitungen 13 und 14 bereitstellen. Die Zuleitungen 13 und 14 sind Stromleiter. Bei einem Dreiphasen-Drehstromsystem sind es zumindest drei Stromleiter, wobei in der Darstellung nach Figur 1 nur 2 Stromleiter 13 und 14 gezeigt sind. Die Stromleiter 13 und 14 treten aus Durchführungen 12 aus, wobei die Durchführungen 12 als Bohrungen in die Welle 8 realisiert sein können, wobei die Durchführungen 12 in Figur 2 dargestellt sind. Die Bohrungen enden in einem Hohlwellenabschnitt 11 (siehe Figur 2) der Welle 8. Werden beispielsweise aufgrund geringerer elektrischer Ströme 150 mm2 Litzen verwendet, können die Wellenbohrungen in einem Winkel von 45° gebohrt werden. Durch den daraus resultierenden steileren Austritt und den geringeren Biegeradius der Litzen reicht eine am Rotor befestigte Kabelklemme zur Fixierung der Litzen aus. Sind aufgrund höherer elektrischer Ströme Litzen notwendig, welche einen größeren Querschnitt als 150 mm2 aufweisen, so kann es bezüglich des Biegeradius zu Problemen kommen.

FIG 2 zeigt in einer detaillierteren Darstellung das Schleifringsystem 9 mit einem Teil des Schleifringläufers 3. Die Zuleitungen 13 und 14 führen dabei von Kontaktpunkten 21 und 22 am Schleifringsystem 9 über axial in einen Hohlwellenabschnitt 11 eingeführte Zuleitungen 13 und 14 zu den Bohrungen 12 am Ende des Hohlwellenabschnitts 11 und können damit das Wicklungssystem 6 des Schleifringläufers 3 elektrisch mit Leistung versorgen. Die Bohrungen 12 sind Durchführungen durch einen Wellenkern 28 für die Durchführung der Stromleiter 13 und 14. Der Wellenkern 28 ist insbesondere ein Vollmaterial, insbesondere aus Stahl. Am Wellenabschnitt 10 ist das Schleifringsystem 9 angebracht, das einen axialen Teil eines Hohlwellenabschnitts 11 der Welle 8 ausmacht. Derartige Schleifringläufer 3 werden beispielsweise bei Windkraftanlagen eingesetzt, die als Generator doppelt gespeiste Asynchronmaschinen aufweisen.

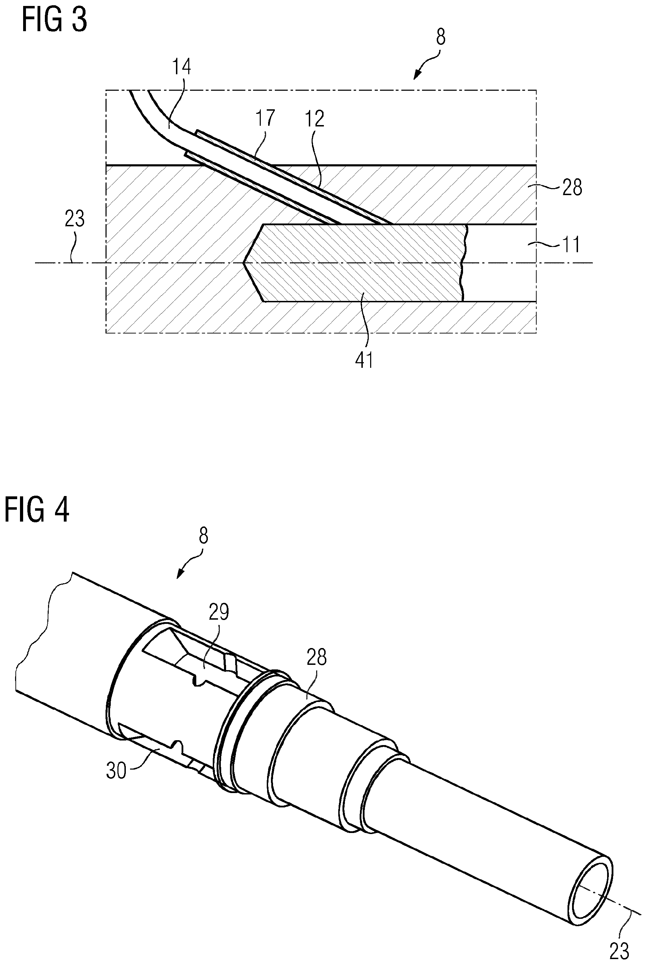

FIG 3 zeigt einen Teillängsschnitt durch die Welle 8. Dieser zeigt in einer vergrößerten Darstellung den Durchtritt des Stromleiters 14 durch den Wellenkern 28, der eine Achse 23 aufweist. Dabei ist der Stromleiter 14 durch eine Hülse 17 in der Durchführung 12 geführt. Der Stromleiter 14 befindet sich in der Welle 8 auch in einem Hohlwellenabschnitt 11. Die Stromverbindung zwischen dem Läufer und dem Schleifring (in Figur 3 nicht dargestellt) wird beispielsweise mit 2 mal 240 mm² Schaltlitzen pro Phase realisiert und durch entsprechende Bohrungen 12 in die Welle 8 geführt. Die elektrische Maschine (also insbesondere die dynamoelektrische Maschine), ist insbesondere eine dreiphasige elektrische Maschine für eine Drehstrom-Anwendung, wie dies bei Windgeneratoren der Fall ist. Zur mechanischen Fixierung kann die Wellenbohrung, also der Hohlwellenabschnitt 11, nach der Verlegung des bzw. der Stromleiter anschließend mit Vergussmasse 41 zumindest teilweise aufgefüllt werden.

FIG 4 zeigt eine perspektivische Darstellung von Taschen 29 und 30 in der Welle 8 bzw. im Wellenkern 28. Der Wellenkern 28 weist hier drei Taschen auf, welche über den Umfang des Wellenkerns 28 gleichmäßig verteilt sind, wobei nach Figur 4 nur zwei Taschen 29 und 30 dargestellt sind. Da bislang bei Windgeneratoren, aufgrund geringerer Ströme, 150 mm2 Litzen verwendet wurden, konnten die Durchführungen (Wellenbohrungen), in Figur 4 nicht gezeigt, in einem Winkel von ca. 45° gebohrt werden. Durch den daraus resultierenden steileren Austritt und den geringeren Biegeradius der Litzen reichte eine am Rotor befestigte Kabelklemme zur Fixierung der Litzen bislang aus. Ein erhöhtes Gewicht der Litzen, wegen des größeren Durchmessers für höheren Stromstärken bei leistungsstärkeren Windgeneratoren und eine geänderte Geometrie der Bohrungen, als Durchführungen für den Stromleiter, also insbesondere für eine oder mehrere Litzen, in einem Winkel von beispielsweise ca. 25° in der Welle 8, kann zur Entstehung von Rissen, insbesondere bei Vorliegen eines Vergusses, führen. Daraus kann man auf eine Verformung der Litzen schließen. Das wiederum führt zu Beschädigungen der Litzen und kann somit bis zum Ausfall der Maschine führen. Durch die Verwendung von Taschen 29, 30 kann der geometrische Verlauf der Litzen bzw. der Stromleiter geändert, insbesondere verbessert werden. Je kleiner der Durchmesser des Stromleiters ist, desto kleiner ist auch der minimale Biegeradius. Bei einem kleinen Biegeradius kann ein großer Winkel von z.B. 40° bis 50° in der Welle für die Durchführung gewählt werden. Je größer der Durchmesser des Stromleiters ist (z.B. >= 240 mm²), desto größer ist auch der minimale Biegeradius. Bei einem großen minimalen Biegeradius ist ein größerer Winkel von z.B. 20° bis 30° in der Welle für die Durchführung zu wählen. Der Winkel betrifft die Längsausrichtung der Durchführung im Verhältnis zur Achse 23. Durch die Verwendung von Taschen 29, 30 im Anschluss an die jeweilige Durchführung kann der verwendete Biegeradius der Stromleiter beeinflusst werden. So kann vermieden werden, dass bedingt durch einen größeren Mindestbiegeradius z.B. von Litzen bei großen Durchmessern, Risse entstehen, die bei einer Ausführung ohne Taschen zu erwarten wären. Aus den Rissen kann man nämlich auf eine Verformung der Litzen schließen. Das wiederum führt zu Beschädigungen der Litzen und kann somit bis zum Ausfall der Maschine führen. Um also die Verlegung der Stromleiter, insbesondere der Litzen, zu erleichtern und/oder die Einhaltung der Mindestbiegeradius zu gewährleisten, werden in die Welle 8, also in den Wellenkern 28, zumindest drei Taschen gefräst. In Figur 4 sind lediglich zwei Taschen 29, 30 gezeigt, wobei sich die dritte Tasche auf der rückwärtigen Seite der perspektivisch dargestellten Welle befindet. In einer Ausgestaltung der Welle 8 ist pro elektrische Phase (U, V, W) eine Tasche vorgesehen.

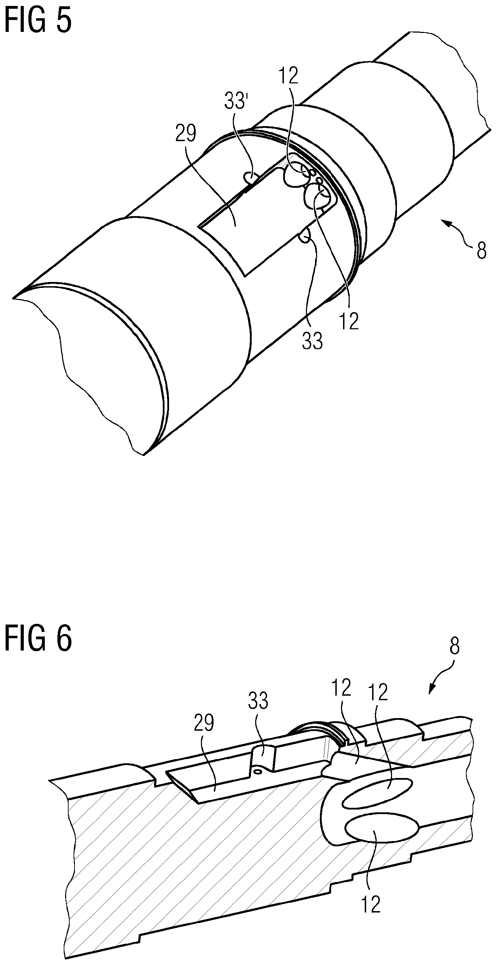

FIG 5 zeigt eine vergrößerte perspektivische Darstellung der Tasche 29 in der Welle 8. Durch eine etwas geänderte Perspektive sind nun in Figur 5 zwei Durchführungen 12 erkennbar, durch welche Stromleiter führbar sind. Die Durchführungen 12 schließen unmittelbar an die Tasche 29 an. Gezeigt sind auch Einbuchtungen 33, 33', in welche Ausbuchtungen 32, 32' eines Halters 24 greifen können.

FIG 6 zeigt einen Längsschnitt durch die Welle 8 und durch die Tasche 29 mit der Einbuchtung 33 und einer Durchführung 12, welche an die Tasche 29 anschließt. Es sind auch zwei weitere Durchführungen 12 gezeigt, die allerdings an einer anderen in der Figur 6 nicht gezeigten Tasche anschließen.

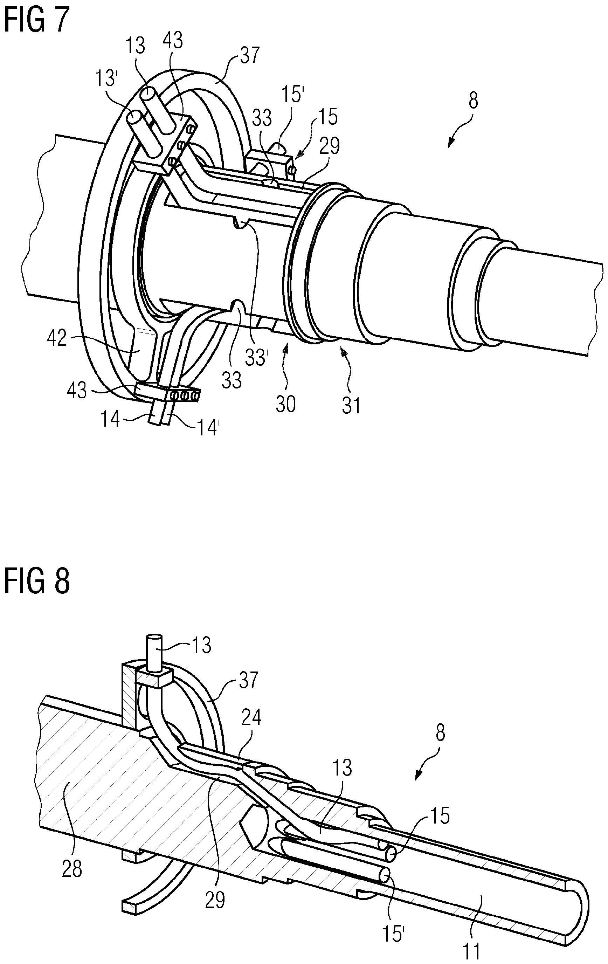

FIG 7 zeigt eine perspektivische Darstellung einer Führung von Stromleitern 13, 13', 14, 14', 15, 15'. Die Führung der Stromleiter 13, 13' ist in der noch offenen Tasche 29 gezeigt. Die Tasche 29 weist Einbuchtungen 33, 33' auf. Die Stromleiter 14, 14' sind in der Tasche 30 geführt. Die Stromleiter 15, 15' sind in der Tasche 31 geführt, wobei die Tasche 31 in der Figur 7 durch die perspektivische Darstellung auf der Rückseite der Ansicht liegt und somit nicht dargestellt ist. Die Stromleiter 13,13',14,14',15,15' sind an einem Steg 37 befestigt. Der Steg 37 ist ringförmig ausgebildet und weist eine Speiche 42 auf. In jeder Tasche werden zwei Litzen verlegt und anschließend mit einem Kabelhalter 43 fixiert, der insbesondere Kunststoff aufweist.

FIG 8 zeigt einen perspektivischen Längsschnitt durch die Welle 8. Gezeigt ist, wie der Halter 24 den Stromleiter 13 in der Tasche 29 hält. Ferner ist gezeigt wie die Leiter 13,15,15' in den Hohlwellenabschnitt 11 geführt sind. Dort können die Stromleiter auch ganz oder teilweise vergossen sein, was allerdings in der Figur 8 nicht gezeigt ist. Im Beispiel nach Figur 8 sind in jeder Tasche beispielsweise zwei Litzen verlegt und anschließend mit einem Kunststoff-Kabelhalter fixiert. Die Form des Halters 24 ist an den Litzendurchmesser und die Tasche 29 in der Welle 8 angepasst und sorgt so für einen optimalen und möglichst spannungslosen Verlauf der Litzen, wie der Litze 13. Der Halter für den oder die Stromleiter kann aus einem Kunststoff sein. Die Halter, wie der Halter 29 können beispielsweise mit je 2xM8 Schrauben (in Figur 8 nicht dargestellt) auf der Welle 8, d. h. am Wellenkern 28 befestigt sein. Die Halter halten die Stromleiter, wie beispielsweise Litzen, auf ihrer Position. Spalte zwischen der Welle 8, den Haltern und den Litzen können mit Vergussmasse (in Figur 8 nicht dargestellt) aufgefüllt sein. Nach dem Aushärten der Vergussmasse wird insbesondere der Bereich der Welle bandagiert und anschließend mit dem fertig montierten Läufer imprägniert.

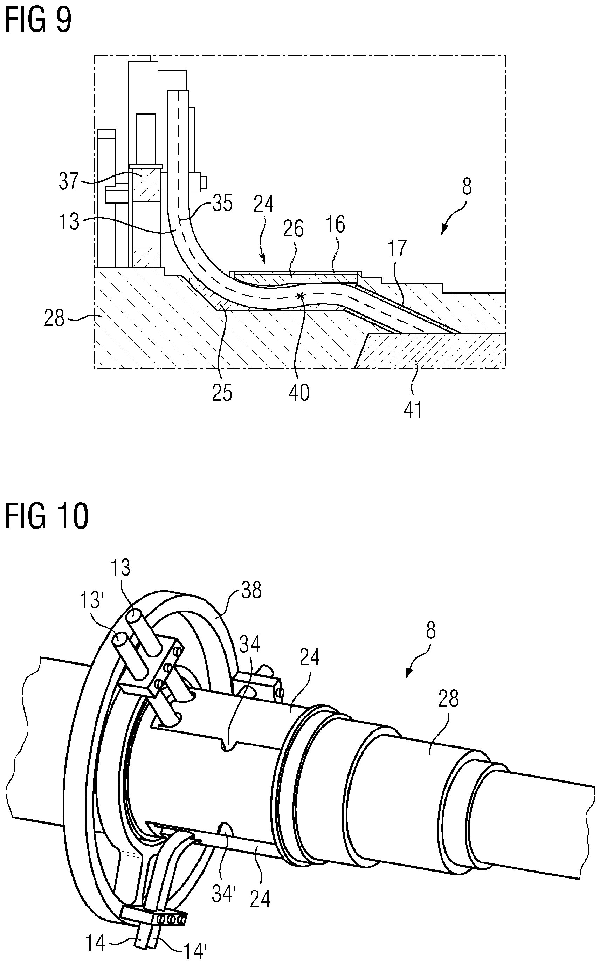

FIG 9 zeigt einen Halter 24 zur Führung des Stromleiters in der Tasche. Der Halter 24 weist eine Basis 25 und einen Deckel 26 auf. Zwischen der Basis 25 und dem Deckel 26 ist der Stromleiter 13 geführt. Der Stromleiter 13 weist eine Biegungskurve 35 auf, welche in einem Bereich zwischen der Basis 25 und dem Deckel 26 einen Wendepunkt 40 aufweist. Der Wendepunkt ist ein Begriff aus der Mathematik. Der Begriff ist aus der Kurvendiskussion bekannt. Im Wendepunkt ist die 2. Ableitung der betrachteten Funktion eines Graphen Null. Am Wendepunkt ändert der Graph, also hier die Biegungskurve, die Richtung seiner Krümmung. Wie die Figur 9 zeigt, kann der Halter 24 mittels einer Bandage 16 fixiert werden. Durch die Verwendung des Halters 24 kann die Verlegung der Stromleiter (zum Beispiel als Litzen oder in Vollmaterial) unter Einhaltung der Biegeradien eindeutig definiert werden. Die Stromleiter sind in der Welle versenkt, und die rotationsbedingt wirkenden Fliehkräfte werden von dem Halter, insbesondere dem Deckel 26 und/oder der Bandage aufgefangen. Die Belastung der Stromleiter reduziert sich insbesondere auf ein Minimum und die Rissbildung kann vermieden bzw. reduziert werden. Dies wiederum hat zur Folge, dass die Funktion der Maschine, insbesondere des Generators, gewährleistet wird.

FIG 10 zeigt eine der Figur 7 ähnliche Darstellung, wobei die Befestigung der Stromleiter an einem Befestigungsring 38 perspektivisch differenzierter dargestellt ist. Figur 10 zeigt, dass die Taschen durch die Halter 24 insbesondere bündig zur weiteren Oberfläche der Welle 8 verschlossen sind. Dabei ist von außen der Deckel des Halters 24 sichtbar. In einer Ausgestaltung der Welle werden, um die Verlegung der Stromleiter, insbesondere der Litzen, zu erleichtern und die Einhaltung der Mindestbiegeradien zu gewährleisten, in die Welle drei Taschen, eine pro Phase, eingebracht, insbesondere gefräst.

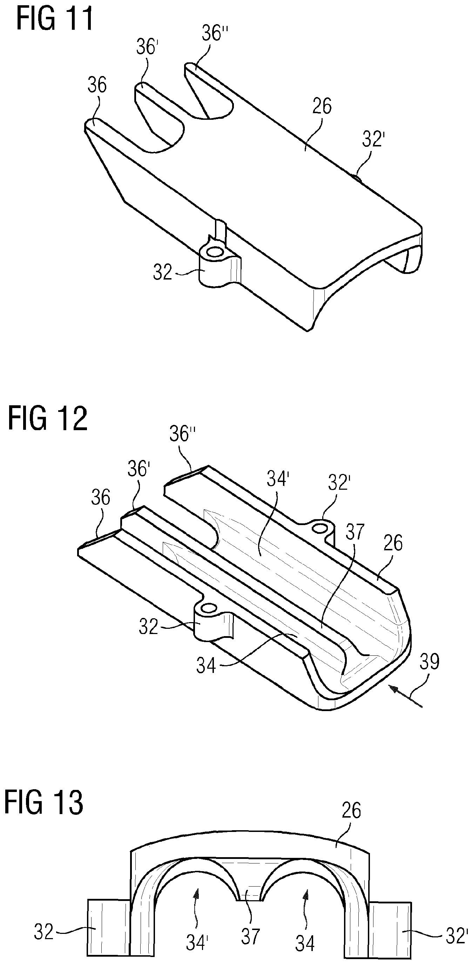

FIG 11 zeigt den Deckel 26 des Halters in einer Aufsicht. Der Deckel 26 weist Zinken 36, 36', 36'' auf. Zwischen den Zinken 36 und 36' befindet sich eine Auslassung zur Führung eines Stromleiters. Dies gilt ebenso für die Auslassung zwischen den Zinken 36' und 36''. Der Deckel 26 weist Ausbuchtungen 32 und 32' auf. In diesen Ausbuchtungen befindet sich jeweils ein Loch durch welches beispielsweise eine Befestigung Schraube (nicht dargestellt) führbar ist. Durch die Form des Halters (kann auch als Kabelhalter bezeichnet werden) ist es möglich, den Austrittswinkel des Stromleiters zu minimieren. Dies gelingt insbesondere, da in zwei separaten Kanälen eine optimale Anpassung an die Litzengeometrie erfolgen kann. Die Kanäle sind insbesondere als Rinnen ausgeführt, wie diese auch in den Figuren 12 und 13 dargestellt sind. Durch die Minimierung des Austrittswinkels ist es möglich, zu verhindern, dass keine zusätzlichen Spannungen durch das unterschreiten der Mindestbiegeradien auftreten. Auch der Kontakt mit scharfkantigen Flächen der Welle 8 kann vermieden werden. Die Verwendung des Halters 24 senkt auch die Menge der benötigten Vergussmasse, welche sich negativ auf die Fliehkräfte auswirken kann.

FIG 12 zeigt den Deckel 26 (gemäß Figur 11) des Halters mit Sicht auf die Seite, welche den Stromleitern zugewandt ist. Gezeigt ist, wie die Zinke 36' in einen Steg 37 übergeht, wobei der Steg 37 die aufzunehmenden Stromleiter positioniert bzw. auch separiert. Figur 12 zeigt eine rückwärtige Ansichtsrichtung 39 des Deckels 26, welche in der nachfolgenden Figur 13 eingenommen ist.

FIG 13 zeigt den Deckel in rückwärtiger Ansicht, wobei Rinnen 34, 34' und die Positionierung des Steges 37 klar zur Geltung kommen.

## Patentansprüche

1. Welle (8) mit einer Durchführung (12) für einen Stromleiter (13, 14, 15) und mit einem Halter (24) zur Positionierung des Stromleiters (13, 14, 15).

2. Welle (8) nach Anspruch 1, wobei der Halter (24) den Stromleiter (13, 14, 15) in bzw. über einen Wendepunkt (40) einer Biegungskurve (35) des Stromleiters (13, 14, 15) fixiert.

3. Welle (8) nach Anspruch 1 oder 2, wobei der Halter (24) eine Basis (25) und einen Deckel (26) aufweist.

4. Welle (8) nach einem der Ansprüche 1 bis 3, wobei die Welle (8) eine Tasche (29, 30, 31) zur Aufnahme des Stromleiters (13, 14, 15) aufweist, wobei die Welle insbesondere eine Welle eines Schleifringläufers ist.

5. Welle (8) nach Anspruch 4, wobei die Welle (8) drei Taschen (29, 30, 31) aufweist, wobei eine Tasche (29, 30, 31) jeweils für eine Phase vorgesehen ist, wobei insbesondere eine Tasche (29, 30, 31) jeweils zwei Stromleiter (13, 14, 15) aufnimmt, wobei die Stromleiter (13, 14, 15) insbesondere Litzen sind.

6. Welle (8) nach Anspruch 4 oder 5, wobei die Tasche (29, 30, 31) den Halter (24) aufnimmt.

7. Welle (8) nach einem der Ansprüche 1 bis 6, wobei der Halter (24) eine Form aufweist, die der Form des Stromleiters (13, 14, 15) entspricht.

8. Welle (8) nach einem der Ansprüche 1 bis 7, wobei der Halter (24) mittels einer Schraubverbindung befestigt ist.

9. Welle (8) nach einem der Ansprüche 1 bis 8, der Halter (24) vergossen ist.

10. Welle (8) nach einem der Ansprüche 1 bis 9, der Stromleiter (13,14,15) vergossen ist.

11. Welle (8) nach einem der Ansprüche 1 bis 10, mit einer Bandage (16) im Bereich des Halters (24).

12. Welle (8) nach einem der Ansprüche 1 bis 11, wobei die Durchführung (12) einen Winkel von 20 Grad bis 30 Grad zur Achse (23) der Welle aufweist.
